# DEMANDE DE BREVET EUROPEEN

(11) **EP 2 450 235 A1**
(43) Date de publication de la demande: **09.05.2012**
(21) Numéro de dépôt: 11306175.8
(22) Date de dépôt: 19.09.2011
(51) Int. Cl.: B60P 7/08, B65H 54/58

(54) **Dispositif tensionneur de sangles**

(30) Priorité: 04.11.2010 FR 1059069
(71) Demandeur: Joubert Productions, 63600 Ambert (FR)
(72) Inventeur: Joubert, Xavier, 63600 AMBERT (FR); Joubert, Thierry, 63600 AMBERT (FR)
(74) Mandataire: Vuillermoz, Bruno

(57) **Abrégé**

Ce dispositif tensionneur de sangle comprend :
- une base (1) dont l'une des extrémités reçoit un tambour rotatif (6), recevant l'extrémité d'un premier brin de sangle ou d'une première sangle (7), ledit tambour (6) étant apte à coopérer avec un levier de mise sous tension (16) articulé sur le tambour, ce dernier étant débrayable par rapport au levier de mise sous tension ;
- un axe de tension au niveau duquel est solidarisé un second brin de sangle ou une deuxième sangle (31) ;
- des moyens de stockage temporaire de ladite première sangle (7) constitués d'éléments indépendants tant de l'axe de tension du deuxième brin ou de la deuxième sangle (31), que du tambour (6), lesdits éléments étant montés sur la base.

## Description

### DOMAINE DE L'INVENTION

L'invention concerne un dispositif tensionneur de sangle ou de courroie, mieux connu sous l'expression anglo-saxonne « *ratchet* ».

Un tel dispositif est classiquement mis en oeuvre pour assurer la tension de sangles, plus particulièrement au niveau de galeries de véhicules automobiles, porte-bagages, et de manière générale, dès lors qu'il convient d'assurer la tension d'une sangle en vue de la fixation d'un article, d'un bagage ou de toute sorte de produit. La ou les sangles en question sont en outre susceptibles d'être munies d'un crochet ou de tout autre organe fonctionnel.

### ETAT ANTERIEUR DE LATECHNIQUE

Les systèmes *« ratchet »* sont aujourd'hui d'un usage largement répandu pour assurer la tension de sangles. Pour l'essentiel, ils se composent traditionnellement d'une base solidarisée à l'extrémité d'une sangle, ladite base comportant un axe sur lequel est monté un tambour rotatif autour duquel est destinée à venir s'enrouler l'autre extrémité de la sangle, voire une autre sangle. Ce tambour est mu en rotation au moyen d'un levier, qualifié de levier de mise sous tension, actionnant en rotation le tambour pour permettre l'enroulement de ladite autre extrémité de la sangle sur celui-ci, et ainsi assurer la tension de ladite sangle. Le plus souvent, le tambour est solidarisé à des roues dentées destinées à coopérer avec des cliquets de retenue montés sur la base, et en outre avec des cliquets d'entraînement montés sur le levier de mise sous tension, afin d'assurer respectivement le maintien sous tension de la sangle et corollairement l'entraînement du tambour lorsque le levier de mise sous tension est actionné.

Certes, les dispositifs du type en question ont démontré leur efficacité, et leur simplicité de mise en oeuvre. Pour autant, ils nécessitent, ainsi que précédemment indiqué, l'aménagement de cliquets de retenue montés sur la base et de cliquets d'entraînement montés sur le levier de mise sous tension, induisant des opérations d'usinage et des opérations de montage consommatrices de temps.

Par ailleurs, dans le cadre de la mise en oeuvre d'un tel dispositif, il s'avère quelquefois souhaitable de pouvoir stocker la sangle en question. A cet effet, on a proposé, par exemple dans le document NL-1 017 968, d'adjoindre au dispositif un axe de stockage supplémentaire, actionnable par une manivelle. Cet axe est présent au voisinage du levier de mise sous tension de la sangle, de sorte que la capacité de stockage s'en trouve considérablement réduite. En outre, le dispositif décrit induit nécessairement le passage de la sangle à stocker par le tambour actionné par le levier de mise sous tension, rendant impossible tout stockage indépendant de ladite sangle, et en outre, susceptible d'affecter la sécurité de la tension de la sangle.

Dans une forme alternative, il a été proposé dans le document DE-20 2004 000491, l'adjonction d'un organe additionnel de stockage, solidarisé audit dispositif, mais s'avérant d'un encombrement important, peu compatible avec l'utilisation souhaitée. Là encore, la sangle stockée passe impérativement par le tambour rotatif actionnable par le levier de mise sous tension, affectant de fait l'utilisation souhaitée d'un tel moyen de stockage indépendant.

### EXPOSE DE L'INVENTION

L'objectif recherché par l'invention, est de disposer d'un organe tensionneur de sangle assurant sa fonction première de tension effective de la sangle, mais en outre, de pouvoir disposer d'un moyen de stockage, simple à mettre en oeuvre, d'encombrement réduit lorsqu'il n'est pas sollicité, et indépendant des moyens de tension proprement dit de la sangle.

A cet effet, elle vise un dispositif tensionneur de sangle comprenant :
- une base définie par deux parois latérales parallèles, dont l'une des extrémités reçoit un tambour rotatif, recevant l'extrémité d'un premier brin de sangle ou d'une première sangle, apte à coopérer avec un levier de mise sous tension articulé sur le tambour, ce dernier étant débrayable par rapport au levier de mise sous tension ;
- un axe s'étendant entre les deux parois latérales définissant la base, au niveau duquel est solidarisé un second brin de sangle ou une deuxième sangle ;
- des moyens de stockage temporaire de ladite sangle.

Selon l'invention, lesdits moyens de stockage temporaire de la sangle sont constitués d'éléments indépendants tant de l'axe de solidarisation du deuxième brin ou de la deuxième sangle, que du tambour coopérant avec le levier de mise sous tension, lesdits éléments étant montés sur la base.

Ce faisant, on dispose d'un dispositif tensionneur de sangle remplissant sa fonction première, tout en ayant la possibilité de stockage d'une longueur importante de sangle, typiquement entre 3 et 5 mètres, actionnable de manière indépendante par rapport au moyen tensionneur proprement dit, de sorte que l'on sécurise la tension effective de la ou des sangles en question, lorsque le dispositif en question est opérationnel.

Selon une première forme de réalisation de l'invention, la base est relativement allongée, et l'axe de solidarisation du deuxième brin ou de la deuxième sangle, fixé aux parois latérales de la base, n'est pas positionné au voisinage de l'extrémité de la base opposée à celle recevant le tambour rotatif. La base reçoit en outre un axe d'enroulement temporaire de la sangle, ménagé au voisinage de l'extrémité de la base, opposée à celle recevant le tambour rotatif. Cet axe est avantageusement pourvu d'une fente apte à recevoir une extrémité de la sangle à enrouler, et peut être actionné par une manivelle escamotable.

Dans le cadre de cette forme de réalisation, l'axe de solidarisation de l'extrémité du deuxième brin ou de la deuxième sangle est reçu au sein de lumières ménagées au sein des faces latérales définissant la base, lesdites lumières s'étendant selon la dimension principale des faces latérales. Avantageusement, cet axe de solidarisation peut adopter au moins une, et préférentiellement deux positions stables au sein desdites lumières :
- l'une, en position opérationnelle de traction, ménagée au voisinage de l'extrémité de la base, opposée à celles recevant le tambour rotatif ;
- l'autre, en position opérationnelle d'enroulement ménagée au voisinage sensiblement du milieu desdites faces latérales.

Cette stabilité est obtenue au moyen d'un ou de plusieurs ressorts filaires reçus dans des lumières ménagées au sein des faces latérales, lesdits ressorts étant configurés et conformés pour coopérer avec ledit axe de solidarisation du deuxième brin ou de la deuxième sangle.

Selon une autre forme de réalisation de l'invention, le dispositif comprend un berceau articulé sur l'axe de solidarisation du deuxième brin ou de la deuxième sangle, alors positionné au voisinage de l'extrémité de la base opposée à celle recevant le tambour rotatif, ledit berceau étant lui-même muni d'un axe de réception de la sangle à stocker.

Avantageusement, selon cette forme de réalisation, ce berceau est escamotable dans le volume défini par la base et le levier de mise sous tension, les faces latérales définissant la base étant munies d'encoches ou d'évidements de réception de l'axe d'enroulement de la sangle dont est pourvu ledit berceau.

Selon un troisième mode de réalisation de l'invention, l'axe d'enroulement est positionné au voisinage de l'axe de solidarisation du deuxième brin ou de la deuxième sangle, alors positionné au voisinage de l'extrémité de la base, opposée à celle recevant le tambour rotatif, et est lui-même reçu dans un logement fixé entre les faces latérales définissant la base et parallèlement à l'axe de solidarisation du deuxième brin ou de la deuxième sangle, l'axe d'enroulement étant escamotable et extirpable hors de ce logement selon une direction parallèle audit logement.

Selon une variante de la forme de réalisation qui précède, l'axe d'enroulement est coaxial avec l'axe de solidarisation du deuxième brin ou de la deuxième sangle, ce dernier faisant alors fonction dudit logement.

### BREVE DESCRIPTION DES FIGURES

La manière dont l'invention peut être réalisée et les avantages qui en découlent, ressortiront mieux des exemples de réalisation qui suivent, donnés à titre indicatif et non limitatif, à l'appui des figures annexées.
La figure 1 est une représentation schématique en perspective d'une première forme de réalisation de l'invention du dispositif tensionneur de sangle, en position repliée et exempt de toute sangle.
La figure 2 est une représentation schématique en perspective du dispositif de la figure 1, muni de deux brins de sangle.
La figure 3 est une représentation schématique en perspective de ce mode de réalisation illustrant le stockage de l'un des brins de sangle.
La figure 4 est une vue schématique en éclaté du dispositif illustré aux figures 1 à 3.
La figure 5 est une représentation schématique en perspective d'une variante du dispositif des figures 1 à 4, dont la figure 6 illustre le stockage de la sangle, et dont les figures 7, 8 et 9 illustrent des vues de détail.
Les figures 10 et 11 sont des représentations schématiques en perspective d'un second mode de réalisation, selon deux positions opérationnelles différentes, les figures 12 et 13 illustrant quant à elles deux modes de stockage différents de la sangle.
La figure 14 est une représentation schématique d'un troisième mode de réalisation de l'invention ; selon ce troisième mode, la figure 15 illustre le stockage de la sangle, la figure 16 une vue de détail, et la figure 17 une vue en éclaté.
Les figures 18 et 19 illustrent une variante du mode de réalisation précédent, dont la figure 20 est une vue de détail.

### DESCRIPTION DETAILLEE DE L'INVENTION

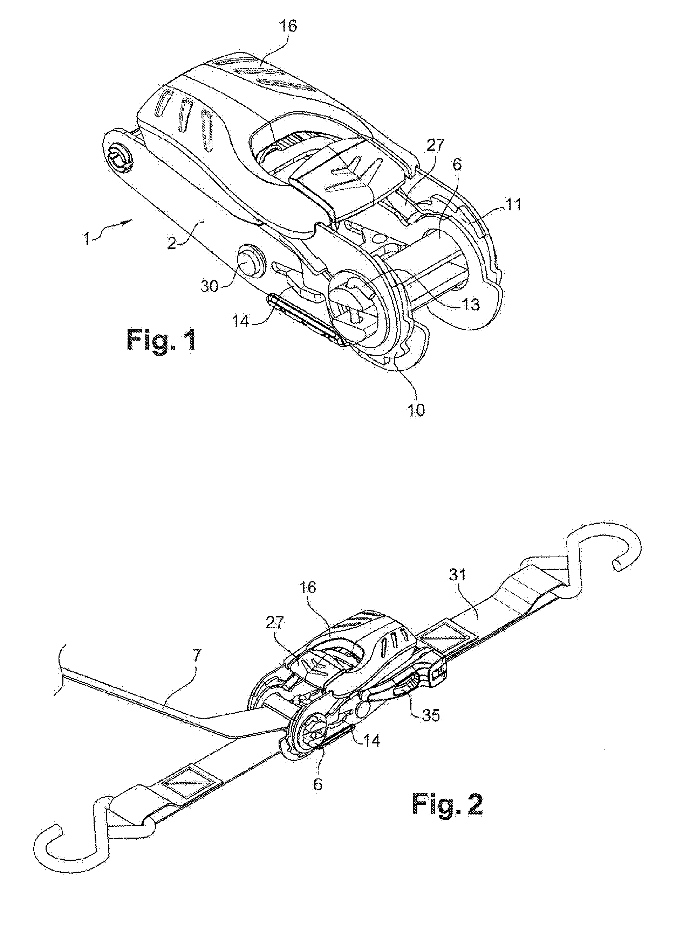

On a représenté en relation avec la figure **1** une première forme de réalisation du dispositif tensionneur de sangle de l'invention.

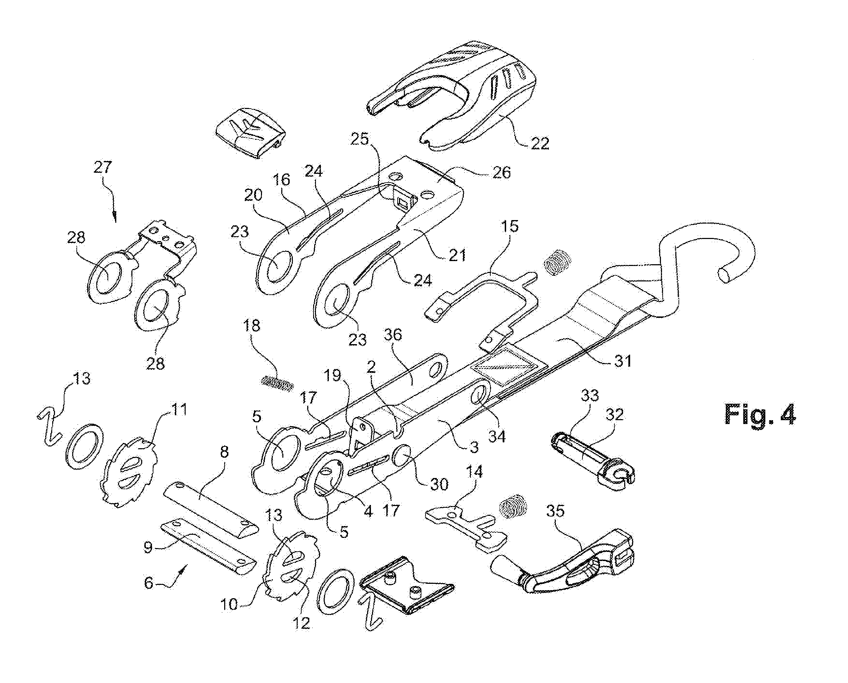

Fondamentalement, celui-ci se compose d'une base **1** définie par deux parois ou faces latérales **2** et **3**, par exemple métalliques, solidarisées entre elles au moyen d'une plaque inférieure **4** (figure 4).

L'une des extrémités de la base ainsi définie est destinée à recevoir un tambour rotatif **6**. Plus précisément, les deux parois ou faces latérales **2**, **3** sont munies chacune à ce niveau d'un alésage **5**, faisant fonction de palier apte à recevoir ledit tambour rotatif **6,** au niveau duquel est destinée à s'enrouler une extrémité d'une sangle **7**, et corolairement à assurer la tension de ladite sangle. En l'espèce, ce tambour **6** est constitué de deux demi-axes **8** et **9** de section transversale sensiblement circulaire, et séparés l'un de l'autre de par leur coopération respective avec deux roues dentées latérales **10** et **11**, percées chacune de deux orifices **12** et **13** de forme correspondante. Les deux demi-axes **8** et **9** sont solidarisés en translation par deux axes pliés **13**, éventuellement par matage ou boutrolage des extrémités des demi-axes.

En l'absence de toute contrainte extérieure, le tambour **6** est monté fou en rotation dans les paliers **5** et est donc susceptible de tourner dans un sens ou dans l'autre.

Comme on l'aura compris, en raison du mode de réalisation du tambour **6**, ce dernier est solidaire des roues dentées latérales **10** et **11**.

Les dents dont sont pourvues lesdites roues dentées **10**, **11** sont profilées de telle sorte à favoriser la rotation du tambour dans un sens, et au contraire s'opposer à sa rotation dans l'autre sens. De fait, elles coopèrent avec, d'une part, un cliquet de retenue **14**, ménagé au sein de la base **1**, et d'autre part, un cliquet d'entraînement **15**, ménagé au sein d'un levier de mise sous tension **1**6.

Le cliquet de retenue **14** est constitué d'une lame rigide, par exemple métallique, dont deux excroissances latérales sont susceptibles de coulisser dans une lumière traversante **17** ménagée respectivement au sein des faces ou parois latérales **2** et **3** de la base **1**. Le mouvement de ce cliquet est purement translatif. Il est soumis en permanence à l'action d'un organe de rappel élastique, typiquement constitué d'un ressort **18**, prenant appui sur une excroissance **19** émanant de la plaque inférieure de liaison **4** des faces latérales **2** et **3** de la base **1**, et induisant la poussée du cliquet **14** contre les dents des roues dentées **10** et **11**.

Le levier de mise sous tension **16** vient s'articuler sur le tambour **6**. Il est constitué d'une structure rigide comportant deux faces latérales parallèles **20**, **21**, solidarisées entre elles par une plaque postérieure **26**, et susceptibles de recevoir par clipsage une zone de préhension **22**. L'extrémité des faces latérales **20**, **21** opposée à la zone de préhension, définit deux flasques également parallèles, pourvus chacun d'un alésage **23**, dont le diamètre interne correspond sensiblement au diamètre externe du tambour 6. Ce dernier constitue donc l'axe d'articulation de levier de mise sous tension **16**.

Le cliquet d'entraînement **15** dont est pourvu le levier de mise sous tension **16**, est également constitué d'une lame métallique, donc rigide, pourvue de deux excroissances latérales susceptibles de se déplacer chacune dans une lumière traversante **24** ménagée au sein des faces latérales **20**, **21** dudit levier. A l'instar du cliquet de retenue **14**, le cliquet d'entraînement **15** est soumis à l'action d'un organe de rappel élastique et par exemple un ressort (non représenté), prenant appui sur une saillie **25** émanant de la plaque postérieure **26** assurant la solidarisation des faces latérales **20** et **21** du levier de mise sous tension, et ce afin d'induire une poussée permanente dudit cliquet d'entraînement contre les dents des roues dentées **10** et **11**.

Ce faisant, les deux cliquets respectivement de retenue et d'entraînement, sont en permanence en prise ou, en d'autres termes, engrènent avec les dents des roues dentées **10** et **11** en raison des actions respectives des ressorts auxquels ils sont soumis. Ce faisant, et compte tenu de l'orientation particulière desdites dents, lesdits cliquets s'opposent à la rotation du tambour **6** dans un sens particulier, et en l'espèce dans le sens des aiguilles d'une montre.

En revanche, toujours en raison de l'orientation et du profil particuliers desdites dents, cette coopération des cliquets de retenue et d'entraînement avec les dents, ne s'oppose pas à la rotation dudit tambour **6** dans le sens opposé. Ainsi donc, lorsqu'un utilisateur souhaite procéder à la mise sous tension de la sangle **7**, il actionne le levier de mise sous tension **16** en l'écartant de la base 1, engendrant la rotation des roues dentées par le biais du cliquet d'entraînement **15**, et induisant la rotation du tambour **6.** Le rabat du levier **16** en direction de la base **1**, n'altère pas la tension préalablement obtenue en raison de la coopération du cliquet de retenue **14** avec les roues dentées **10** et **11**, maintenant de fait le tambour dans la position dans laquelle il se trouvait lors de l'actionnement précédent du levier de mise sous tension **16**.

Le dispositif comprend également un levier de déverrouillage **27**, également articulé sur le tambour **6**. Dans l'exemple décrit, ce levier de déverrouillage **27** est actionnable de manière indépendante du levier d'entraînement ou de mise sous tension **16**. Il est muni également de deux alésages **28**, dont le diamètre interne correspond sensiblement au diamètre externe du tambour **6**. Les faces définissant les alésages **28** présentent un profilé en forme de came à largeur progressive, destiné à coopérer avec le cliquet de retenue **14** et le cliquet d'entraînement **15**, de telle sorte à libérer le tambour **6** des contraintes exercées par ces deux organes.

Ainsi donc, pour assurer la libération du tambour **6,** il suffit de basculer le levier de déverrouillage **27** par simple rotation par rapport à son axe d'articulation.

La base **1** comporte en outre un axe **30** situé dans la forme de réalisation décrite sensiblement au milieu des parois latérales **2** et **3** définissant ladite base. Cet axe **30**, parallèle au tambour **6**, est destiné à recevoir l'extrémité d'un autre brin **31** ou d'une deuxième sangle. Ce deuxième brun est solidarisé, par exemple par couture sur cet axe **30**.

En outre, l'extrémité de la base **1** opposée à celle recevant le tambour **6**, reçoit un axe d'enroulement ou de stockage **32**, pourvu d'une fente **33** destinée à recevoir l'extrémité, notamment de la sangle **7** lorsque celle-ci n'est pas mise en oeuvre pour assurer la tension. Cet axe **32** est reçu dans des alésages **34** ménagés au sein des faces latérales **2** et **3** de la base **1**, alésages faisant fonction de palier dans lequel l'axe **32** peut tourner librement. A cet effet, l'une des extrémités de l'axe **32** est susceptible de coopérer avec une manivelle **35**, dont l'extrémité libre du bras est susceptible d'être escamotée à l'intérieur du dispositif, la face latérale **3** de la base **1** étant à cet effet munie d'un évidement **36**.

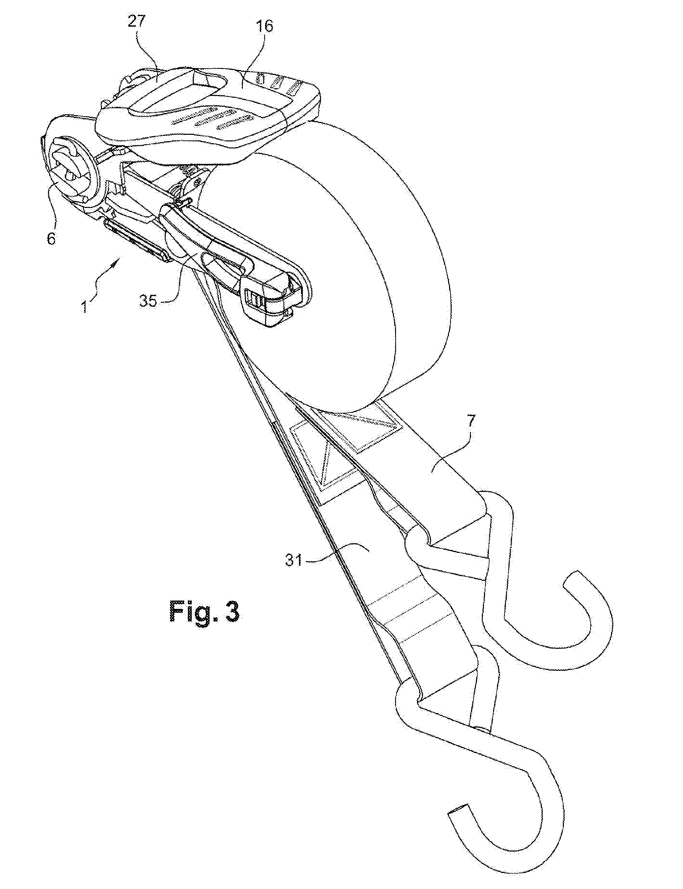

On observe ainsi sur la figure 3 la sangle 7 stockée temporairement et, en raison de l'écartement relatif entre l'axe **30** et l'axe **32**, il devient possible de stocker une longueur relativement importante de sangle, typiquement voisine de 5 mètres, et ce de manière simple, sans générer un encombrement trop important.

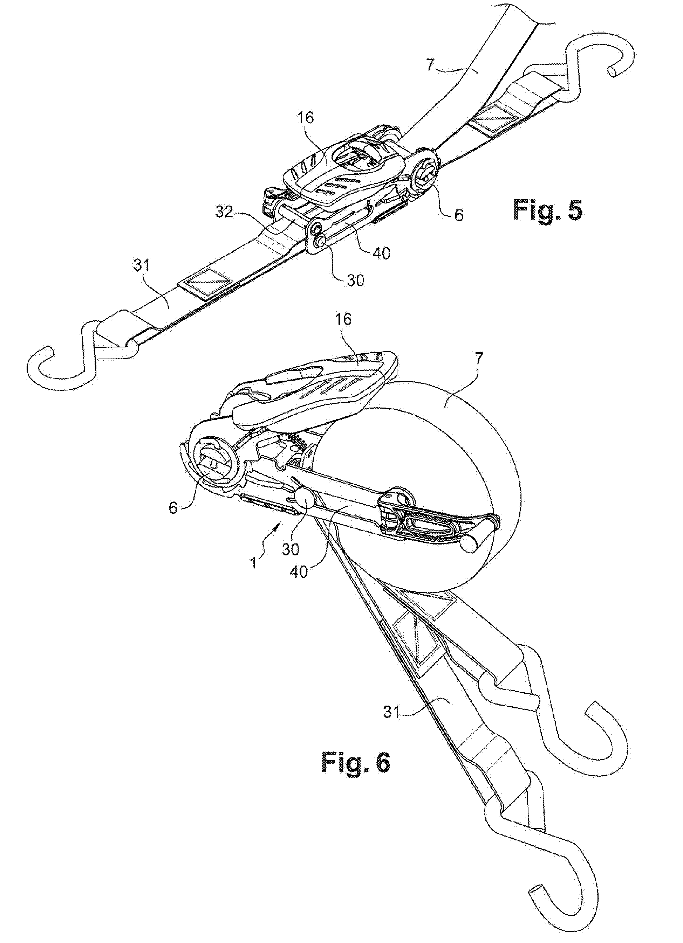

Selon une variante de la forme de réalisation précédente illustrée au sein des figures 5 à 9, l'axe **30** qui était de position figée dans les figures 1 à 4, est susceptible de se déplacer au sein d'une lumière **40** ménagée au sein des faces latérales **2** et **3** définissant la base **1.** Ces lumières s'étendent sensiblement selon la même direction que la dimension principale desdites faces latérales **2**, **3**.

Dans cette forme de réalisation, l'axe d'enroulement ou de stockage temporaire **32** est positionné de manière légèrement supérieure par rapport à la forme de réalisation précédente au sein desdites faces latérales.

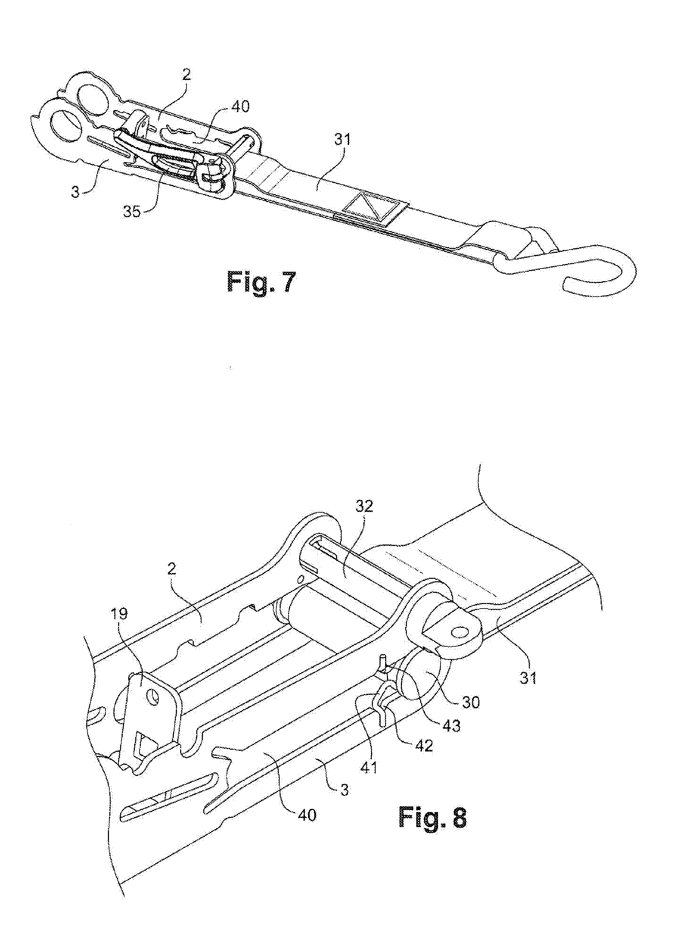

En position de tension, l'axe **30** vient en butée contre l'extrémité des lumières **40** voisine de l'extrémité de la base opposée à celle recevant le tambour **6**, tel que représenté sur les figures 5, 8 et 9. Dans cette configuration, l'axe **32** de stockage temporaire ne remplit pas de fonction et ne gêne pas le fonctionnement du dispositif tensionneur de câble. En outre, et ainsi qu'on l'a représenté sur la figure 8, l'axe **30** peut être maintenu de manière stable dans cette position au moyen d'un ressort filaire **41** logé dans des évidements **42, 43** ménagés au sein desdites faces latérales **2** et 3.

En revanche, lorsque le dispositif n'est plus en tension et que l'on souhaite stocker temporairement la sangle **7**, ledit axe **30** est déplacé le long des lumières **40** en direction du tambour **6**, de telle sorte à libérer le volume nécessaire pour l'enroulement effectif de la sangle, tel qu'on l'a représenté sur la figure 6.

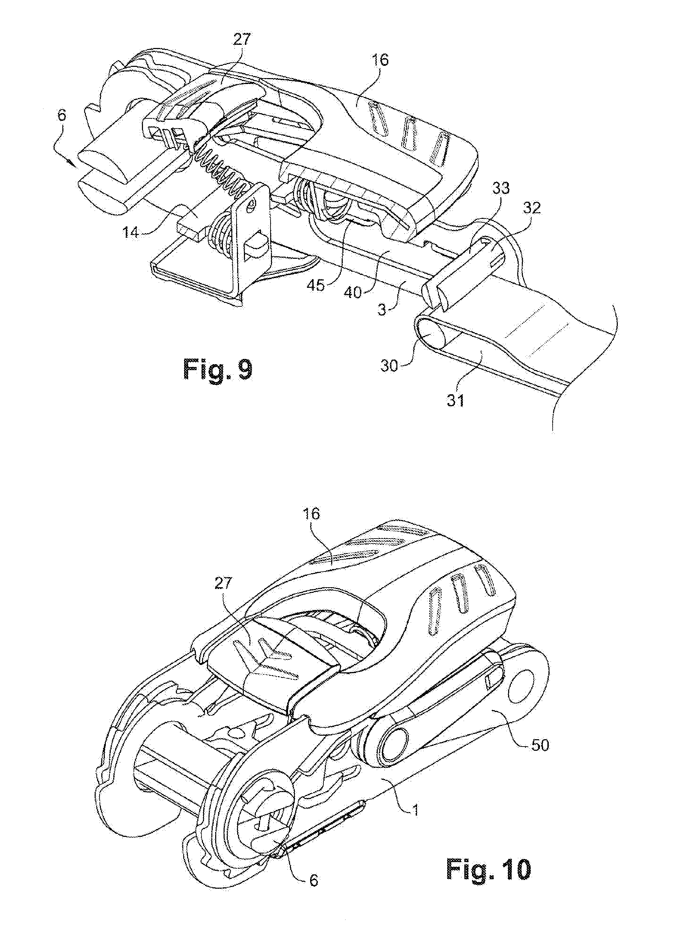

Dans une version évoluée telle que représentée au sein des figures 7 et 9, l'axe **30** de tension peut être stocké en position stable au fond des lumières **40** proches du tambour **6,** également au moyen d'un ressort filaire **45**, là encore, reçu dans des évidements ménagés au sein des faces latérales **2** et **3.** Dans ce mode de réalisation, on définit donc deux positions stables de positionnement de l'axe de tension **30**, respectivement une position opérationnelle de tension, et une position de repli, permettant de dégager le volume nécessaire pour enrouler la sangle **7** sur l'axe **32.**

Selon un deuxième mode de réalisation de l'invention illustré au sein des figures 10 à 13, l'axe **30** sert d'axe d'articulation à un berceau **50**, susceptible donc d'être escamoté par simple rotation à l'intérieur de la base **1**, les faces latérales **2** et **3** étant munies d'évidements **51** aptes à recevoir l'axe d'enroulement **32** monté à l'extrémité du berceau.

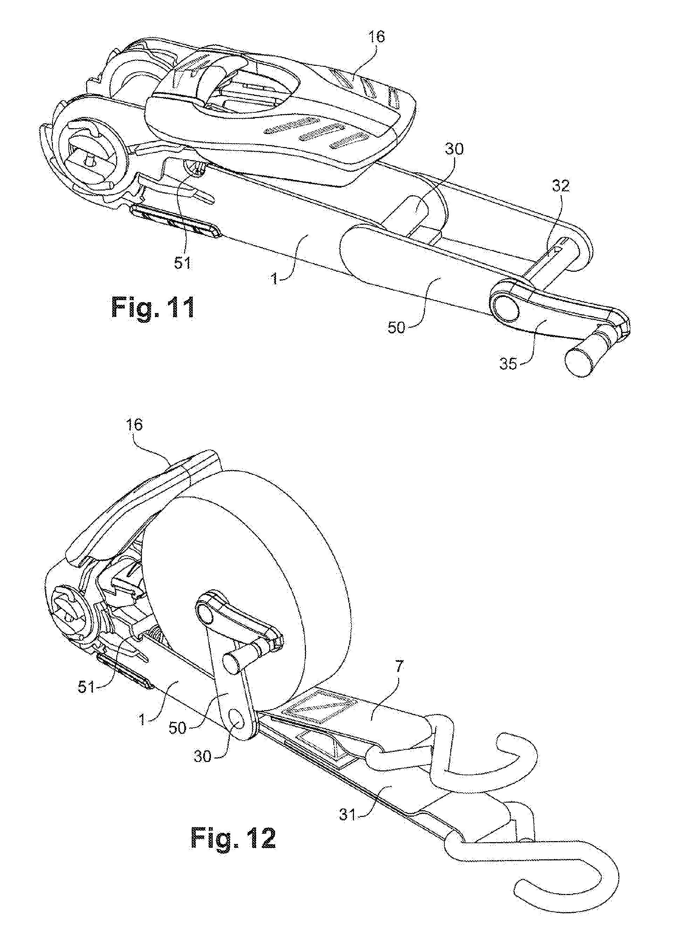

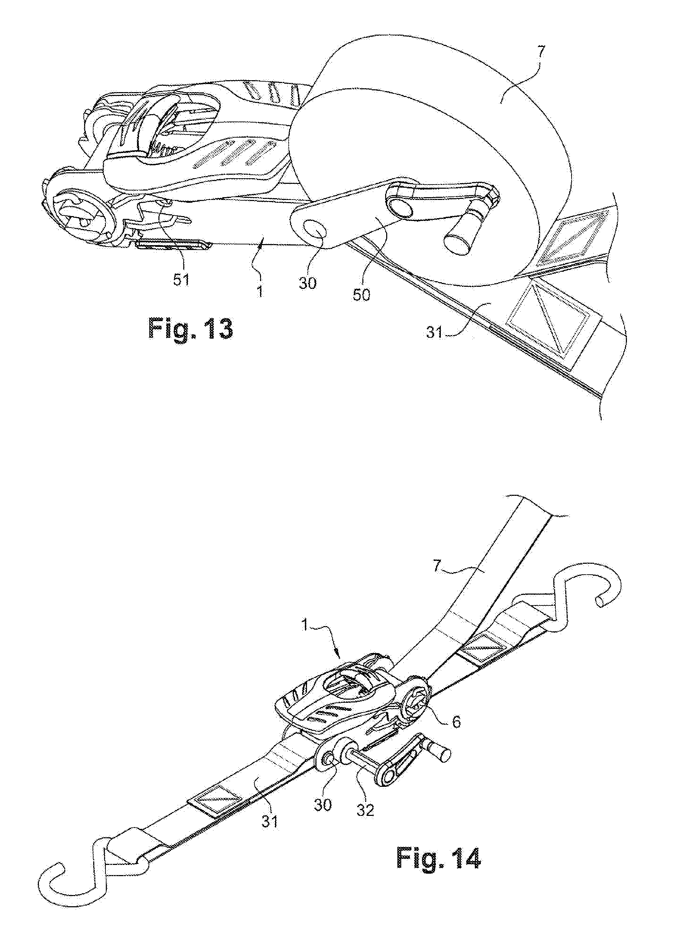

On observe sur les figures 12 et 13 deux modes de stockage de la sangle 7, dont on peut encore observer le volume conséquent propre à favoriser ce stockage.

Selon un troisième mode de réalisation de l'invention illustré au sein des figures 14 à 17, l'axe de tension **30** est fixé de manière standard au niveau de l'extrémité opposée de la base à celle recevant le tambour **6**. De manière immédiatement adjacente, l'axe de stockage temporaire **32** est reçu dans un logement cylindrique **60**, les faces latérales **2** et **3** de la base **1** étant pourvues à cet effet de lumières traversantes **61** correspondantes.

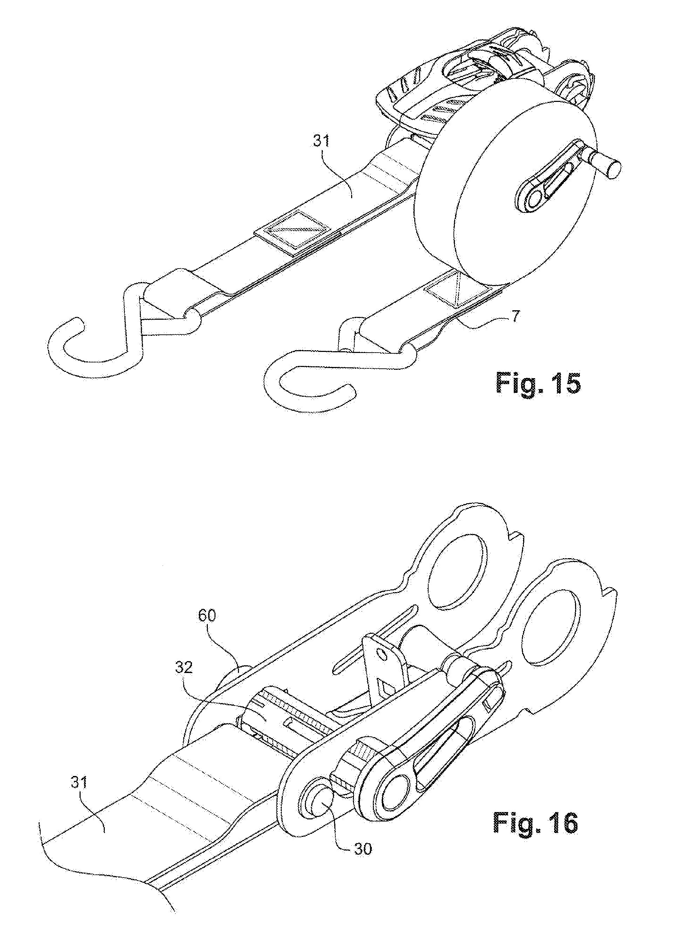

L'axe d'enroulement **32** proprement dit est susceptible d'être escamoté hors de ce logement **60** par simple traction, ledit axe se trouvant de fait décalé de la base, ainsi qu'on peut l'observer sur la figure 14, pour permettre l'enroulement de la sangle 7, comme on peut le voir sur la figure 15. On conçoit qu'en raison de ce décalage, il est possible de prévoir un enroulement d'une longueur de sangle encore plus importante que les formes de réalisation précédentes. On munit avantageusement le logement **60** ou l'axe **32** d'un point dur, apte à coopérer avec l'axe ou logement, permettant de définir deux positions dudit axe **32**, respectivement une position opérationnelle d'enroulement, hors du logement **60** (figure 14) et une position escamotée à l'intérieur du logement (figure 16).

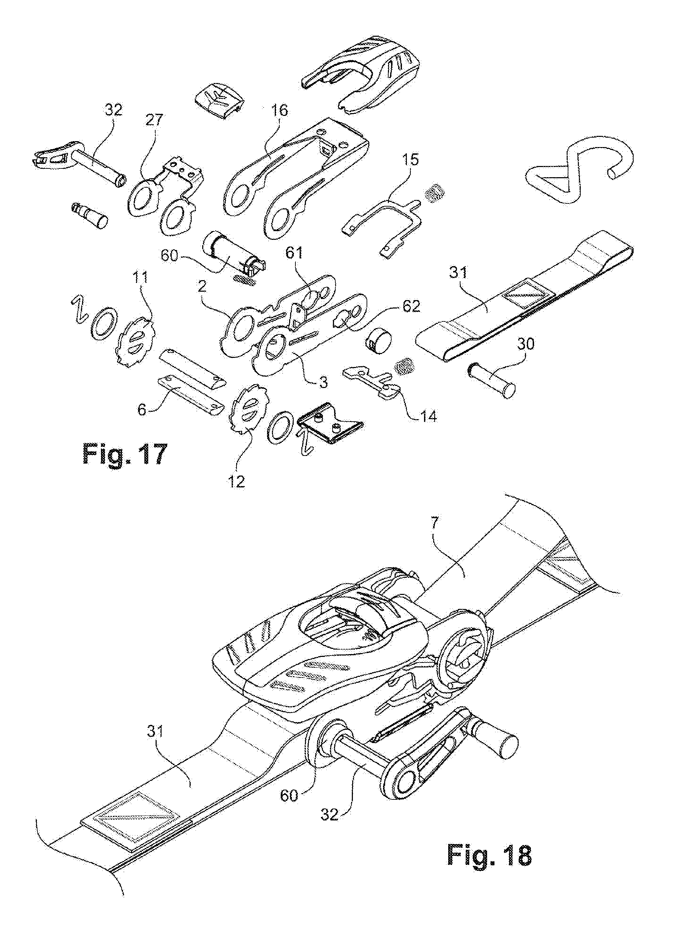

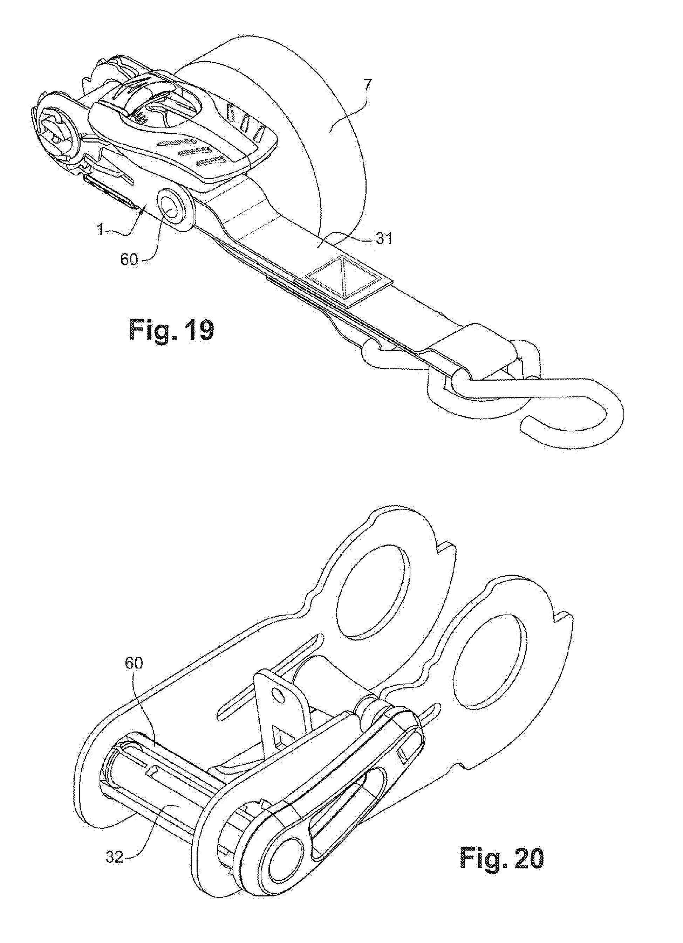

Selon une variante de la forme de réalisation représentée au sein des figures 18 à 20, le logement **60** fait fonction d'axe de réception ou de tension du second brin de sangle **31,** c'est-à-dire remplit la fonction de l'axe **30**. L'axe **32** de stockage temporaire, coulisse, comme dans le cas précédent à l'intérieur de ce logement **60**, tel qu'on peut l'observer sur la figure 18, aboutissant à une simplification du dispositif et là encore à un stockage conséquent de la sangle.

On conçoit de fait, tout l'intérêt des différents modes de réalisation de l'invention, tant en termes de longueur de stockage d'une sangle, lorsque celle-ci n'est pas en tension, qu'en termes de réduction de l'encombrement généré par un tel stockage, et enfin, en termes de sécurisation de la tension.

## Revendications

1. Dispositif tensionneur de sangle comprenant :
- une base (1) définie par deux parois ou faces latérales parallèles (2, 3), dont l'une des extrémités reçoit un tambour rotatif (6), recevant l'extrémité d'un premier brin de sangle ou d'une première sangle (7), ledit tambour (6) étant apte à coopérer avec un levier de mise sous tension (16) articulé sur le tambour, ce dernier étant débrayable par rapport au levier de mise sous tension ;
- un axe de tension (30) s'étendant entre les deux parois latérales (2, 3) définissant la base (1), au niveau duquel est solidarisé un second brin de sangle ou une deuxième sangle (31) ;
- des moyens de stockage temporaire de ladite première sangle (7) ;
***caractérisé* en ce que** lesdits moyens de stockage temporaire de la sangle sont constitués d'éléments indépendants tant de l'axe de tension (30) du deuxième brin ou de la deuxième sangle (31), que du tambour (6), lesdits éléments étant montés sur la base.

2. Dispositif tensionneur de sangle selon la revendication 1, ***caractérisé* en ce que** l'axe de tension (30) et de solidarisation du deuxième brin ou de la deuxième sangle (31) n'est pas positionné au voisinage de l'extrémité de la base (1) opposée à celle recevant le tambour rotatif (6), et **en ce que** la base (1) reçoit en outre un axe d'enroulement temporaire (32) de la première sangle (7), ménagé au voisinage de l'extrémité de la base, opposée à celle recevant le tambour rotatif (6).

3. Dispositif tensionneur de sangle selon la revendication 2, ***caractérisé* en ce que** les faces latérales (2, 3) de la base (1) sont munies de lumières (40), s'étendant selon la dimension principale desdites faces latérales, dans lesquelles est reçu l'axe (30) de tension et de solidarisation de l'extrémité du deuxième brin ou de la deuxième sangle (31).

4. Dispositif tensionneur de sangle selon la revendication 3, ***caractérisé* en ce que** les lumières (40) comportent en outre un ou plusieurs ressorts filaires (41, 45), destinés à coopérer avec l'axe de tension (30), de telle sorte à définir au moins une, et préférentiellement deux positions stables dudit axe au sein des lumières (40) :
- une position opérationnelle de traction, apte à maintenir ledit axe (30) au voisinage de l'extrémité de la base (1), opposée à celles recevant le tambour rotatif (6) ;
- et une position opérationnelle d'enroulement, apte à maintenir ledit axe (30) sensiblement au voisinage du milieu desdites faces latérales.

5. Dispositif tensionneur de sangle selon la revendication 1, ***caractérisé* en ce qu'**il comprend un berceau (50), articulé sur l'axe (30) de tension et de solidarisation du deuxième brin ou de la deuxième sangle (31), ce dernier étant positionné au voisinage de l'extrémité de la base (1) opposée à celle recevant le tambour rotatif (6), ledit berceau étant lui-même muni d'un axe d'enroulement (32) de la première sangle (7).

6. Dispositif tensionneur de sangle selon la revendication 5, ***caractérisé* en ce que** le berceau (50) est escamotable dans le volume défini par la base (1) et le levier de mise sous tension (16), les faces latérales (2, 3) définissant la base étant munies d'encoches ou d'évidements (51) de réception de l'axe d'enroulement (32) de la sangle (7).

7. Dispositif tensionneur de sangle selon la revendication 1, ***caractérisé* en ce que** l'axe d'enroulement (32) de la sangle (7) est positionné au voisinage de l'axe (30) de tension et de solidarisation du deuxième brin ou de la deuxième sangle (31), et au voisinage de l'extrémité de la base (1), opposée à celle recevant le tambour rotatif (6), ledit axe d'enroulement (32) étant lui-même reçu dans un logement fixé entre les faces latérales (2, 3) définissant la base et orienté parallèlement à l'axe (30) de tension et de solidarisation du deuxième brin ou de la deuxième sangle, l'axe d'enroulement (32) étant escamotable et extirpable hors de ce logement (60) selon une direction parallèle audit logement, afin de permettre l'enroulement effectif de la sangle (7).

8. Dispositif tensionneur de sangle selon la revendication 7, ***caractérisé* en ce que** l'axe d'enroulement (32) est coaxial avec l'axe de tension et de solidarisation du deuxième brin ou de la deuxième sangle (30), ce dernier remplissant alors la fonction du logement (60).

9. Dispositif tensionneur de sangle selon l'une des revendications 2 à 8, ***caractérisé* en ce que** l'axe d'enroulement (32) de la sangle (7) est muni d'une fente (33) apte à recevoir une extrémité de la sangle à enrouler, ledit axe étant susceptible d'être actionné par une manivelle escamotable.
